**Europäisches Patentamt**

**European Patent Office**

**Office européen des brevets**

(19)

(11) Numéro de publication : **0 378 471 B1**

(12) **FASCICULE DE BREVET EUROPEEN**

(45) Date de publication du fascicule du brevet :
**23.12.92 Bulletin 92/52**

(51) Int. Cl.$^5$ : **G02B 6/38**

(21) Numéro de dépôt : **90400060.1**

(22) Date de dépôt : **09.01.90**

(54) **Connecteur pour câbles à fibres optiques.**

(30) Priorité : **10.01.89 FR 8900207**

(43) Date de publication de la demande :
**18.07.90 Bulletin 90/29**

(45) Mention de la délivrance du brevet :
**23.12.92 Bulletin 92/52**

(84) Etats contractants désignés :
**BE DE GB IT NL SE**

(56) Documents cités :
**EP-A- 0 184 908**
**WO-A-83/00935**
**WO-A-86/00422**
**US-A- 4 595 251**

(73) Titulaire : **SOCIETE ECA, Société dite**
**19 rue Barreau**
**F-92600 Asnières (FR)**

(72) Inventeur : **Tamagno, Didier Yves Francis**
**Quartier l'Acatée**
**F-83136 Rocbaron (FR)**
Inventeur : **Mas, Georges Léon Joseph Marie**
**"Les Marronniers"**
**F-83990 Saint-Tropez (FR)**
Inventeur : **Navelier, Alain Fernand Eugène**
**André**
**Quartier Barbaroux**
**F-83130 La Garde (FR)**

(74) Mandataire : **Barnay, André François**
**Cabinet Barnay 72, rue d'Hauteville**
**F-75010 Paris (FR)**

**EP 0 378 471 B1**

Jouve, 18, rue Saint-Denis, 75001 PARIS

## Description

La présente invention est relative à un connecteur pour câbles à fibres optiques.

Le développement des réseaux terrestres de transmission par câbles à fibres optiques a entraîné le développement de différents types de connecteurs.

Cependant les câbles à fibres optiques sont maintenant également utilisés dans des applications telles que la transmission d'informations entre un système sous-marin et sa plate-forme d'exploitation.

Dans ce cas, le câble lui-même constitue en général un produit dit "consommable", en ce sens qu'il doit être remplacé à chaque opération, pour assurer une liaison fiable entre l'appareil et sa base.

Les conditions d'utilisation de ces appareils en milieu aquatique, notamment en milieu marin, sont telles qu'il est très important que les parties des connecteurs soient parfaitement protégées non seulement contre l'humidité mais également contre toutes les pollutions qui peuvent se produire à bord de navires, barges ou autres.

S'il est relativement facile de réaliser l'un des éléments d'un connecteur de façon qu'il soit monté par exemple dans une extrémité d'un alésage d'un bloc constituant le corps du connecteur, cet alésage étant fermé à son extrémité opposée par un bouchon obturateur amovible, le fait de prévoir un simple chapeau, également amovible, sur le second élément du connecteur pour le protéger avant qu'il soit connecté au premier à l'intérieur dudit alésage ne s'est pas révélé suffisant dans la pratique.

En effet, le capuchon peut se trouver arraché accidentellement et en outre l'extrémité du connecteur peut être mouillée d'eau de mer entre le moment où le capuchon protecteur a été enlevé et l'instant où il est enfin introduit dans l'alésage contenant déjà l'autre élément du connecteur.

On connaît déjà un type de connecteur comportant un corps percé d'un alésage, dans l'une des extrémités duquel un élément mâle est destiné à être fixé, et dans l'autre extrémité duquel un élément femelle est destiné à être introduit de façon à venir se raccorder audit élément mâle, l'extrémité avant dudit élément femelle étant obturée par des moyens de protection préalablement à son introduction dans ledit corps, comme décrit par exemple dans le document WO 83/00935.

Bien qu'il soit tout à fait efficace au niveau de la connexion, ce connecteur est de réalisation relativement compliquée et peu commode pour être utilisé dans des conditions relativement précaires telles que celles que l'on rencontre en milieu agressif.

Le but de l'invention est de remédier à cet inconvénient.

L'invention a pour objet à cet effet un connecteur pour câbles à fibres optiques, du type mentionné précédemment, caractérisé en ce que lesdits éléments mâle et femelle comportent chacun des moyens de positionnement angulaire mutuel et en ce que lesdits moyens de protection sont constitués par un capuchon protecteur déchirable recouvrant complètement l'extrémité avant dudit élément femelle, des moyens étant prévus dans le corps pour immobiliser ledit capuchon dans celui-ci lors de l'introduction dudit élément femelle et des moyens étant prévus sur l'extrémité avant de l'élément femelle pour couper et déchirer ledit capuchon ainsi immobilisé, par l'intérieur de celui-ci, lorsque ladite introduction dudit élément femelle dans ledit corps est poursuivie.

Suivant une autre caractéristique de l'invention, lesdits moyens de positionnement angulaire sont constitués par des surfaces inclinées de façon identique entourant chacun desdits éléments et adaptées pour venir en contact ensemble en position de connexion desdits éléments.

D'une façon avantageuse, ladite surface inclinée de l'élément mâle est constituée par une pièce tubulaire coupée en biais et qui l'entoure tandis que sur l'élément femelle ladite surface est formée par son extrémité coupée en biais de façon correspondante qui délimite une arête aiguë adaptée pour couper et déchirer ledit capuchon.

La description qui va suivre, en regard des dessins annexés à titre d'exemple non limitatif, permettra de bien comprendre comment l'invention peut être mise en pratique.

La figure 1 est une vue en élévation latérale des éléments mâle et femelle d'un connecteur suivant l'invention pour câbles à fibres optiques, l'élément femelle étant représenté en coupe longitudinale, et le corps du connecteur étant omis.

La figure 2 montre les éléments du connecteur suivant l'invention en position dans le corps du connecteur dans la première phase de réalisation de la connexion.

La figure 3 montre la seconde phase de la réalisation de la connexion.

La figure 4 montre, avec arrachement partiel, la connexion achevée.

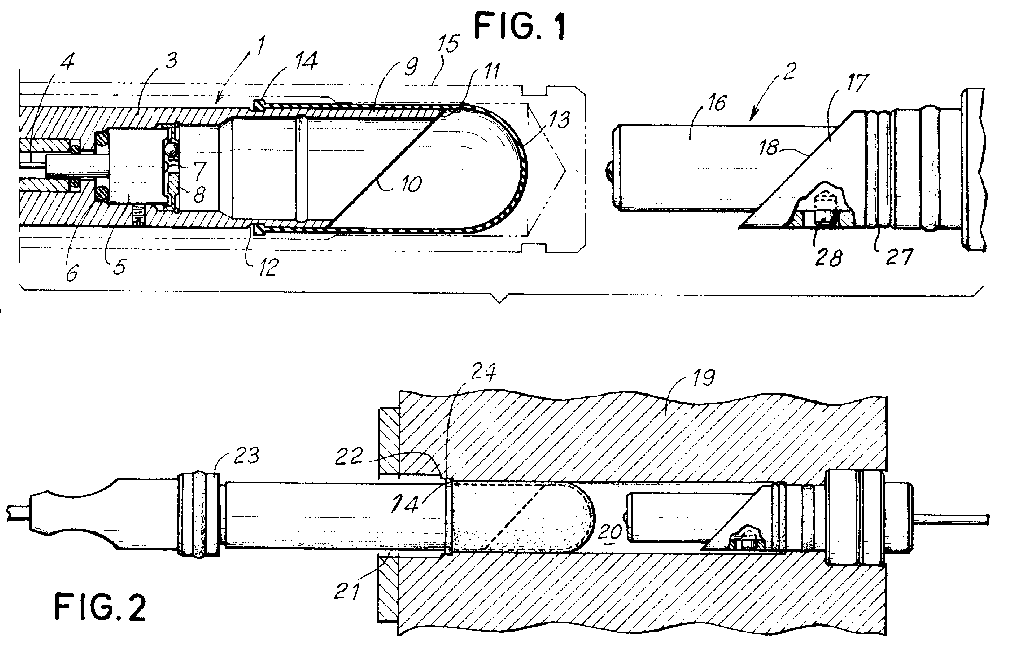

En se référant à la figure 1, on a représenté les deux éléments mâle et femelle 2, 1 respectivement d'un connecteur suivant l'invention.

L'élément femelle 1 comprend un corps cylindrique 3 ayant un alésage axial dans lequel s'étend le câble optique 4 arrêté par une pièce 5 disposée dans une chambre 6 et comportant une lentille 7. Un dispositif de centrage 8 à billes est disposé devant la pièce 5; l'agencement de ces différents organes étant tel que décrit par US 4.723.830.

Suivant l'invention, le corps 3 de l'élément femelle 1 est prolongé comme représenté en 9, coupé en biais à peu près à 45° afin de réaliser une surface inclinée 10 ayant une arête aiguë 11, et présentant une gorge circulaire 12 peu profonde.

Suivant une caractéristique de l'invention, il est prévu un capuchon protecteur 13 analogue à un doigt de gant, en matière souple, déchirable et mince, par exemple en caoutchouc ou en matière plastique apte à être déchirée par l'arête aiguë 11, comme on le décrira dans la suite. Le capuchon 13 comporte autour de son extrémité ouverte un bourrelet périphérique 14 qui est logé dans la gorge 12 afin de retenir le capuchon en place.

L'ensemble de l'élément femelle 1 peut être complété par un chapeau amovible 15 ayant une résistance élevée, utilisé par exemple pour protéger l'élément des chocs en cours de transport et en stockage.

L'élément mâle 2 comporte, comme décrit par US 4.723.830, une partie cylindrique 16 présentant une lentille centrale et apte à pénétrer et à s'ajuster dans l'élément femelle 1, en contact avec le dispositif de centrage à billes 8.

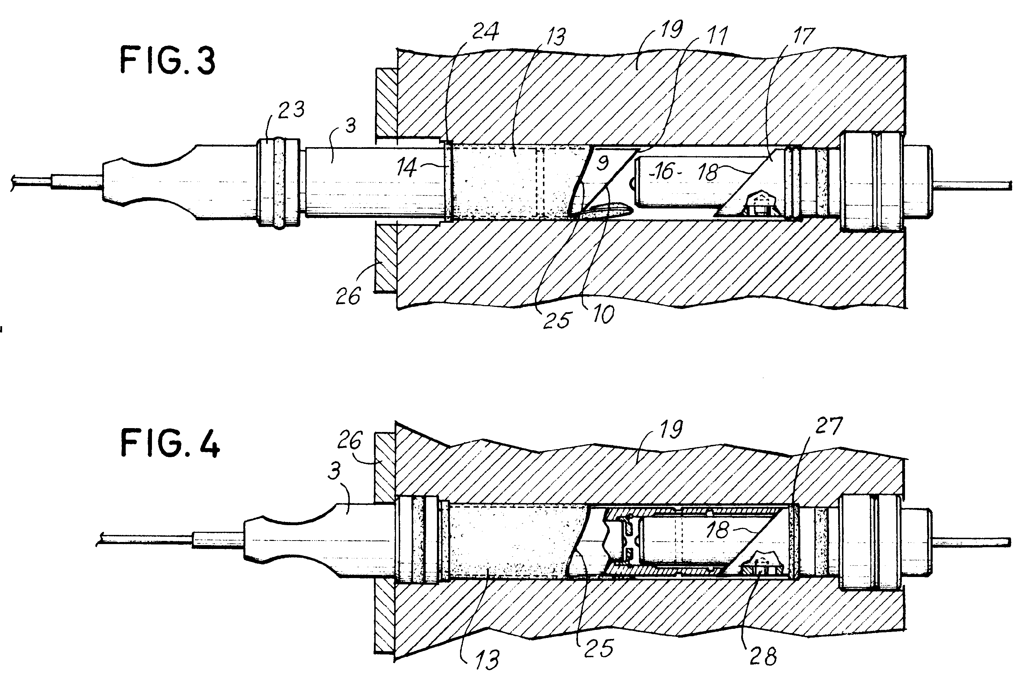

La partie 16 de l'élément mâle est entourée par une pièce cylindrique 17 coupée en biais d'une façon identique à la partie 9 de l'élément femelle, de manière à réaliser une surface inclinée 18 apte à venir en contact avec la surface 10 de l'élément femelle. La pièce 17 est montée coulissante axialement sur l'élément mâle en butée contre un ressort 27 et guidée par un doigt 28. Ainsi la pièce 17 peut reculer, une fois les surfaces 18 et 10 en contact, provoquant l'écrasement du ressort 27 sans perdre la bonne orientation grâce au doigt 28 (figure 4).

On comprend, bien entendu, que la pièce 17 est située sur la partie 16 à la distance voulue pour que la lentille vienne en contact avec le dispositif de centrage 8 en même temps que les surfaces inclinées complémentaires 10, 18.

En se référant à la figure 2, on a représenté en partie le corps 19 du connecteur, percé d'un alésage 20. L'élément mâle 2 est fixé dans le corps 19, de préférence de manière étanche, dans l'une des extrémités de l'alésage 20 dont le diamètre est à peu près égal à celui de la partie 9 de l'élément femelle recouverte par le capuchon 13.

A l'entrée de l'alésage 20 opposée à celle dans laquelle est fixé l'élément mâle 2 est prévu un contre-alésage étagé 21 délimitant un premier épaulement 22 adapté pour recevoir une bague circonférentielle d'arrêt 23 de l'élément femelle 1, et un second épaulement 24 adapté pour recevoir le bourrelet circonférentiel 14 du capuchon 13 lorsqu'on engage l'élément femelle 1 dans le corps 19, dans la première phase du raccordement, après avoir retiré le chapeau protecteur 15.

Dans la seconde phase de l'opération, représentée à la figure 3, on pousse l'élément femelle 1 pour continuer de l'enfoncer dans l'alésage 20 du corps 19.

Dans ce mouvement, l'épaulement 24 retient le bourrelet 14 du capuchon 13, qui glisse ainsi sur la partie 9 de l'élément 1 qui continue d'avancer, et l'arête aiguë 11 vient alors couper l'extrémité du capuchon et le déchirer par l'intérieur comme représenté en 25 à la figure 3.

Dans la phase finale de l'opération, représentée à la figure 4, la partie 9 de l'élément 1 vient s'ajuster autour de la partie 16 de l'élément mâle 2 et l'entrée en contact de la surface inclinée 10 avec la surface 18 de l'élément 2, inclinée de façon correspondante assure le positionnement angulaire approprié des deux éléments, et enfin la bague d'arrêt 23 de l'élément 1 vient s'ajuster dans le contre-alésage 21, en appui contre l'épaulement 22.

D'une façon avantageuse, un organe de verrouillage mobile 26 monté pivotant sur l'extrémité du corps 19 est amené en position de verrouillage contre l'arrière de la bague 23.

On comprend que le corps 19 du connecteur peut avoir une forme externe quelconque, présentant des moyens d'accrochage ou de retenue, ou autres, nécessaires pour l'application envisagée. Pour cette raison cette forme externe du corps n'a pas été représentée.

On comprend également que le connecteur suivant l'invention permet une mise en oeuvre rapide tout en assurant une protection totale de l'élément femelle contre les intempéries, les poussières, les liquides et toutes projections de matières pouvant polluer l'extrémité du câble tout en assurant également un positionnement mutuel sans défaut des deux éléments de liaison.

## Revendications

1. Connecteur pour câbles, notamment à fibres optiques, du type comprenant un corps (19) percé d'un alésage (20), dans l'une des extrémités duquel un élément mâle (2) est destiné à être fixé, et dans l'autre extrémité duquel un élément femelle (1) est destiné à être introduit de façon à venir se raccorder audit élément mâle, l'extrémité avant dudit élément femelle étant obturée par des moyens de protection (13) préalablement à son introduction dans ledit corps, caractérisé en ce que lesdits éléments mâle et femelle (1, 2) comportent chacun des moyens (10,18) de positionnement angulaire mutuel, et en ce que lesdits moyens de protection (13) sont constitués par un capuchon protecteur déchirable recouvrant complètement l'extrémité avant dudit élément femelle (1), des moyens (24) étant prévus dans le corps (19) pour immobiliser ledit capuchon (13) dans celui-ci lors de l'introduction dudit élément femelle et des moyens (11) étant prévus sur l'extrémité avant de l'élément femelle pour couper et déchirer ledit capuchon ainsi immobilisé, par l'intérieur de celui-ci, lorsque ladite introduction dudit élément femelle dans ledit corps est poursuivie.

**2.** Connecteur suivant la revendication 1, caractérisé en ce que lesdits moyens de positionnement angulaire sont constitués sur chacun desdits éléments par une surface inclinée (10, 18) entourant chaque élément.

**3.** Connecteur suivant la revendication 2, caractérisé en ce que ladite surface inclinée (18) de l'élément mâle (2) est formée sur une pièce (17) fixée autour dudit élément.

**4.** Connecteur suivant la revendication 2, caractérisé en ce que ladite surface inclinée (10) de l'élément femelle (1) est formée par découpage en biais d'un prolongement (9) du corps dudit élément, délimitant une arête aiguë (11) constituant lesdits moyens pour couper et déchirer ledit capuchon (13).

**5.** Connecteur suivant la revendication 1, caractérisé en ce que ledit capuchon déchirable (13) est analogue à un doigt de gant en caoutchouc ou en matière plastique mince.

**6.** Connecteur suivant l'une quelconque des revendications 1 à 5, caractérisé en ce que l'extrémité du corps (19) de connecteur opposée à celle où est fixé l'élément mâle (2) comporte un contre-alésage (21) adapté pour loger un organe d'arrêt (23) dudit élément femelle (1) et délimitant un épaulement (24) qui constitue lesdits moyens pour immobiliser le capuchon (13).

**7.** Connecteur suivant la revendication 6, caractérisé en ce qu'il comporte un organe de verrouillage (26) monté mobile sur le corps (19) du connecteur et adapté pour retenir l'élément femelle (1) dans ledit alésage, une fois l'introduction de cet élément terminée.

**Patentansprüche**

**1.** Stecker für Kabel, insbesondere aus optischen Fasern, bestehend aus einem Gehäuse (19), das mit einer Durchgangsbohrung (20) versehen ist, in deren einem Ende ein Stiftelement (2) zu befestigen ist, und in deren anderem Ende ein Buchsenelement (1) so einzuführen ist, daß es sich mit dem Stiftelement verbindet, wobei das vordere Ende des Buchsenelementes vor der Einführung dieses Elements in das Gehäuse mit Schutzmitteln (13) zu verschließen ist, dadurch gekennzeichnet, daß das Buchsenelement und das Stiftelement (1, 2) jeweils Mittel (10, 18) zur Einstellung der Winkellage zueinander aufweisen, und daß die Schutzmittel (13) aus einer das vordere Ende des Buchsenelementes (1) abdeckenden zerreißbaren Schutzkappe bestehen, wobei im Gehäuse (19) Mittel (24) zum Festhalten der Schutzkappe (13) im Gehäuse während der Einführung des Buchsenelementes und an dem vorderen Ende des Buchsenelementes Mittel (11) vorgesehen sind, welche die so festgehaltene Schutzkappe von der Innenseite der Schutzkappe her aufschneiden und zerreißen, wenn die Einführung des Buchsenelementes in das Gehäuse fortgesetzt wird.

**2.** Stecker nach Anspruch 1, dadurch gekennzeichnet, daß die genannten Mittel zur Einstellung der Winkellage an jedem der genannten Steckerelemente aus einer das jeweilige Element umschließenden geneigten Fläche (10, 18) bestehen.

**3.** Stecker nach Anspruch 2, dadurch gekennzeichnet, daß die geneigte Fläche (18) des Stiftelementes (2) an einem um dieses Stiftelement herum angeordneten Teil (17) ausgebildet ist.

**4.** Stecker nach Anspruch 2, dadurch gekennzeichnet, daß die geneigte Fläche (10) des Buchsenelementes (1) durch schräges Abschneiden einer Verlängerung (9) des Gehäuses dieses Buchsenelementes ausgebildet ist und so durch eine scharfe Kante (11) begrenzt ist, welche die Mittel zum Aufschneiden und Zerreißen der Schutzkappe (13) bildet.

**5.** Stecker nach Anspruch 1, dadurch gekennzeichnet, daß die zerreißbare Schutzkappe (13) analog einem Handschuhfinger aus dünnwandigem Gummi oder Kunststoff ausgebildet ist.

**6.** Stecker nach einem beliebigen der o. g. Ansprüche 1 bis 5, dadurch gekennzeichnet, daß das dem Gehäuseende, an dem das Stiftelement (2) befestigt ist,
gegenüberliegende Ende des Steckergehäuses (19) eine für die Aufnahme einer Arretiervorrichtung (23) des Buchsenelementes (1) angepaßte Gegenbohrung (21) aufweist, die eine Schulter (24) begrenzt, welche besagte Mittel zur Blockierung der Schutzkappe (13) darstellt.

**7.** Stecker nach Anspruch 6, dadurch gekennzeichnet, daß er mit einer beweglich am Gehäuse (19) des Steckers angebrachten Verriegelungsvorrichtung (26) versehen ist, die zum Rückhalten des Buchsenelementes (1) in der Bohrung dient, sobald die Einführung dieses Steckerelementes beendet ist.

## Claims

1. A connector for cables, in particular optical fibre cables, of the type comprising a body (19) provided with a bore (20), in one end of which a male member (2) is intended to be secured, and in the other end of which a female member (1) is intended to be introduced in such a way that it is connected with said male member, the front end of said female member being closed by protecting means (13) prior to its insertion into said body, characterised in that said male and female members (1, 2) each comprise angular mutual positioning means (10, 18), and in that said protecting means (13) comprise a protective cap which can be torn off and which completely covers the front end of said female member (1), means (24) being provided in the body (19) for fixing said cap (13) in position therein during the insertion of said female member (1), and means (11) being provided on the front end of the female member for cutting and tearing off said cap thus fixed in position, from the inside thereof, when carrying out said insertion of said female member into said body.

2. A connector according to claim 1, characterised in that said angular positioning means are formed on each of said members by an inclined surface (10, 18) surrounding each member.

3. A connector according to claim 2, characterised in that said inclined surface (18) of the male member (2) is formed by a part (17) secured around said member.

4. A connector according to claim 2, characterised in that said inclined surface (10) of the female member (1) is formed by obliquely cutting-off of an extension (9) of the body of said member, thus defining a sharp edge (11) forming said means for cutting and tearing off said cap (13).

5. A connector according to claim 1, characterised in that said tearable cap (13) is analogous to a finger of a rubber glove or of thin plastics material.

6. A connector according to any one of claims 1 to 5, characterised in that the end of the connector body (19) opposite that in which the male member (2) is secured comprises a counter-bore (21) adapted to accommodate a stop member (23) of said female member (1) and defining a shoulder (24) which forms said means for fixing the cap (13) in position.

7. A connector according to claim 6, characterised in that it comprises a locking member (26) mounted movably on the connector body (19) and adapted to retain the female member (1) in said bore, once the insertion of said element has been completed.

FIG. 1

FIG. 2

FIG.3

FIG.4

EP 0 378 471 B1